# EUROPÄISCHE PATENTSCHRIFT

(11) **EP 0 695 620 B1**
(45) Veröffentlichungstag und Bekanntmachung des Hinweises auf die Patenterteilung: **27.10.1999**
(21) Anmeldenummer: 95107301.4
(22) Anmeldetag: 13.05.1995
(51) Int. Cl.: B29C 49/48, B65F 1/16

(54) **Flaches Teil mit einer Abdichtung, und Verfahren und Werkzeug zu dessen Herstellung**
Flat piece with seal, and process and tool for its manufacturing
Pièce plate avec garniture d'étanchéité, et procédé et outil pour sa fabrication

(30) Priorität: 30.07.1994 DE 4427125
(43) Veröffentlichungstag der Anmeldung: 07.02.1996
(73) Patentinhaber: Gebr. OTTO KG, 57223 Kreuztal (DE)
(72) Erfinder: Schumacher, Stefan Holger, D-50737 Köln (DE)
(74) Vertreter: COHAUSZ HANNIG DAWIDOWICZ & PARTNER

(56) Entgegenhaltungen:
- DE-A- 1 479 563
- DE-A- 2 444 700
- DE-A- 3 620 140
- DE-U- 8 815 089
- US-A- 5 165 564

## Beschreibung

Die Erfindung betrifft ein Verfahren und ein Werkzeug zur Herstellung einer Abdichtung am äußeren Rand eines flachen Teils, insbesondere eines Deckels oder einer inneren Trennwand, insbesondere für einen Müllbehälter oder einen Lagerkasten. Die Erfindung betrifft weiterhin das mittels Verfahren und Werkzeug hergestellte flache Teil mit Abdichtung.

Es ist bekannt, an den Seitenrändern einer Trennwand Dichtlippen anzuformen, damit diese sich an die Innenwand abdichtend anlegen. Zum Herstellen dieser Dichtlippen weist die Form eine der Dichtlippe entsprechend geformte Ausnehmung auf, in die das Kunststoffmaterial gedrückt wird. Die Herstellung einer solchen einzigen Dichtlippe an der Stirnseite einer Trennwand ist hierdurch verhältnismäßig aufwendig.

Verfahren und Werkzeuge zur Herstellung von Blasformteilen sind zum Beispiel aus der DE-A-2444700 bekannt. Das hier vorgestellte die Blasform bildende Werkzeug besteht aus axial relativ zueinander beweglichen Teilen, wobei mit Hilfe der beweglichen Teile bestimmte Abschnitte des zu formenden Schlauches zusammen- oder abgequetscht werden können.

Aufgabe der Erfindung ist es, ein Verfahren und ein Werkzeug bereitzustellen, mit dem eine sichere Abdichtung mit dünnen Dichtlippen besonders einfach herstellbar ist. Ebenfalls ist Aufgabe der Erfindung eine sichere Abdichtung zu schaffen.

Diese Aufgabe wird erfindungsgemäß dadurch gelöst, daß die Dichtlippen des durch Hohlkörperblasformen hergestellten Teils durch ein Verpressen von Randbereichen eines eingelegten erwärmten Kunststoffschlauchs hergestellt wird, wobei das Blasform-Werkzeug an den Außenrändern Schieber aufweist, die durch ein nach Innenfahren die Randbereiche zu zwei jeweils an den Seitenrändern des Teils vorstehenden Dichtlippen verpressen, die zwischen sich eine sich öffnende Rinne bilden.

Hierdurch erhält das Werkzeug zum Hohlkörperblasformen zusätzlich die Funktion eines Preßwerkzeugs, so daß in einem einzigen Arbeitsvorgang sowohl der Hohlkörper entsteht als auch die Dichlippen gepresst werden. Das Herstellungsverfahren ist dadurch nicht nur einfach und preiswert, sondern es können auch besonders dünne Dichtlippen erzeugt werden, die sich an der Innenwand mit hoher Dichtigkeit anschmiegen. Ferner ist ein solches Werkzeug einfach, sicher und präzise.

Ungewöhnlich ist an dieser neuen technischen Lehre, daß die üblicherweise in Formen an den Rändern entstehenden ungewünschten dünnen Überstände bewußt zu Dichtlippen ausgebaut worden sind.

Besonders vorteilhaft ist es, daß an den Seitenrändern des Teils jeweils zwei Dichtlippen vorstehen, die zwischen sich eine zur Innenwand sich öffnende Rinne bilden. Hierdurch wird der Trennwand ein besonders sicherer Halt gegeben, bei optimaler Abdichtung und guter Kräfteverteilung. Von größtem Vorteil ist hierbei, wenn nach dem Einführen des erwärmten, insbesondere vorgeblasenen Kunststoffschlauches in die geöffnete Form die Formhälften geschlossen werden und danach seitlich an der Form angeordnete Schieber zu den Stirnseiten des Teils bewegbar sind, um die vorstehenden Randleisten (Außenkonturen) des Materials zu Dichtlippen zu verpressen. Auch sollte für jeden Seitenrand (Stirnseite), an dem Dichtlippen angeordnet werden sollen, mindestens ein Schieber vorgesehen sein.

Vorzugweise wird vorgeschlagen, daß die Dichtlippen außerhalb des äußersten Dichtlippenrandes eine Wandstärke von 0,3 bis 0,7, insbesondere von 0,5 mm haben.

Ein Ausführungsbeispiel der Erfindung ist in den Zeichnungen dargestellt und wird im folgenden näher beschrieben. Es zeigen:

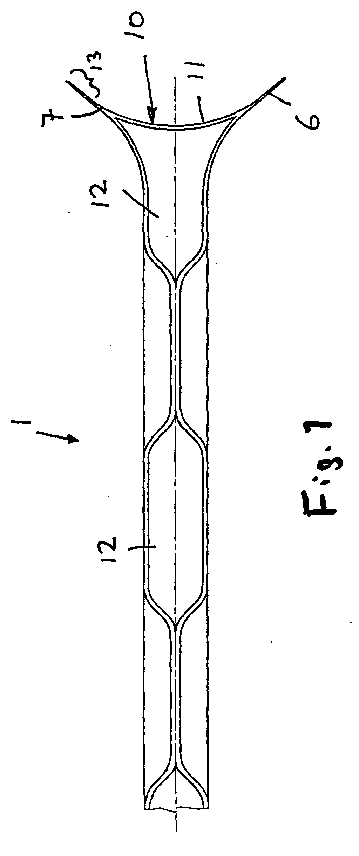

- Figur 1:: Einen waagerechten Schnitt durch einen seitlichen Bereich einer Trennwand.

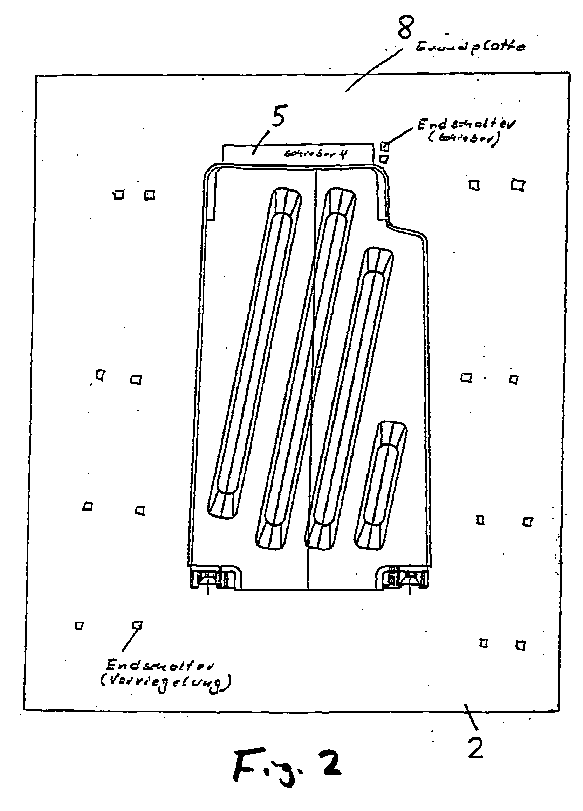

- Figur 2:: Eine Seitenansicht einer ersten Formhälfte des Werkzeugs.

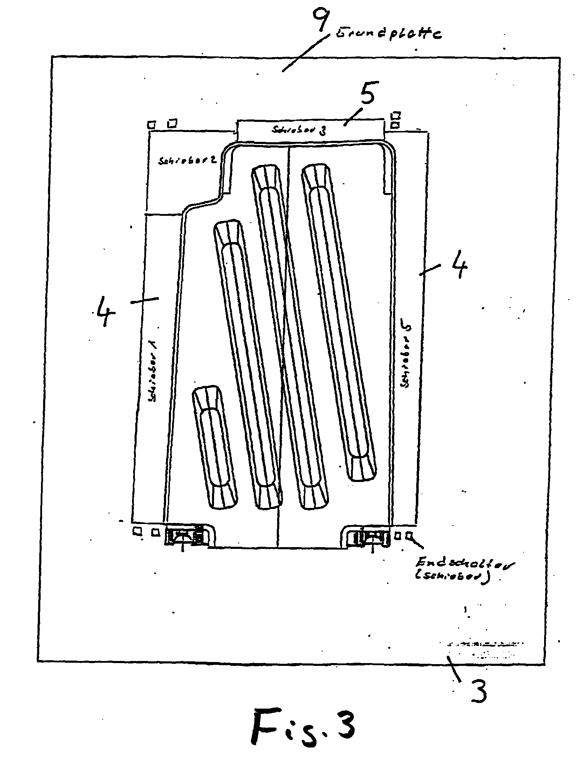

- Figur 3:: Eine Seitenansicht der zweiten Formhälfte des Werkzeugs und

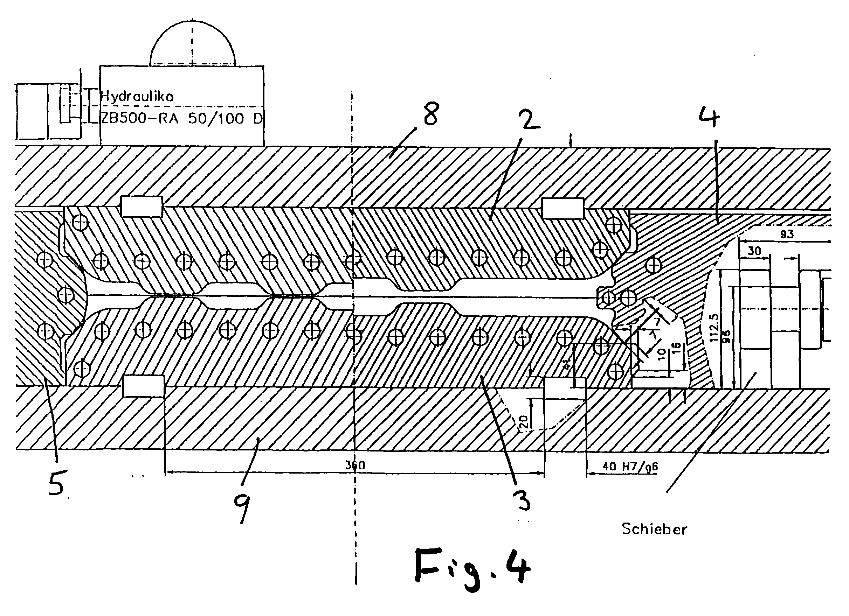

- Figur 4:: einen Schnitt durch das Werkzeug in einem Ausschnitt.

Das flache Teil, insbesondere eine Trennwand 1 wird in einem Hohlkörperblasformverfahren hergestellt. Hierbei wird ein durch Extrusion erzeugter erwärmter Kunststoffschlauch zwischen die zwei Formhälften einer Blasform gebracht. Beim Schließen der Formhälften wird der Schlauch abgequetscht, wobei der Schlauch vorher oder währenddessen gespreizt und leicht vorgeblasen wird.

Nach dem Verriegeln der beiden Formhälften 2, 3 aneinander werden seitliche Schieber 4, 5 auf die Formhälften stirnseitig zubewegt. Hierbei ist von Bedeutung, daß das zwischen den Formhälften 2, 3 liegende Kunststoffmaterial des Schlauches an den Stirnseiten bzw. Seitenrändern der Trennwand vorstehende Material bildet, das zwischen den Stirnseiten einer Formhälfte 2, 3 und der Vorderseite eines Schiebers 4, 5 zu Dichtlippen 6,7 verpresst wird. Die Schieber gleiten zwischen zueinander parallelen Grundplatten 8, 9, zwischen denen die Formhälften und die Schieber liegen.

Nach Fertigstellung der Trennwand 1 stehen die Dichtlippen 6, 7 in einem Winkel α von etwa 45 Grad jeweils zu einer Seite der Trennwand im Bereich des Seitenrandes bzw. der Stirnseite 10 ab, wobei die Dichtlippen 6, 7 im Bereich der Stirnseite 10 eine etwa teilkreisförmige Längsmulde, bzw. Rinne 11 bilden. Diese Längsmulde, bzw. Rinne 11 verschließt den weitest außenliegenden Hohlraum 12 der Trennwand.

Die Dichtlippen 6, 7 weisen außerhalb des äußersten Bereichs 13 eine Stärke bzw. Dicke von 0,3 bis 0,7 insbesondere von 0,5 mm auf.

Die Trennwand kann einen Müllbehälter oder einen Lagerkasten in Teilräume unterteilen. Ferner kann die Konstruktion oder das Verfahren bei verschiedensten Teilen, wie bei Deckeln verwendet werden.

## Patentansprüche

1. Verfahren zur Herstellung eines mit einer Abdichtung an seinem äußeren Rand versehenen flachen Teils insbesondere eines Deckels oder einer inneren Trennwand, insbesondere für einen Müllbehälter oder einen Lagerkasten, bei dem jeweils zwei an den Seitenrändern des durch Hohlkörperblasformen hergestellten Teils (1) vorstehende Dichtlippen (6, 7) durch ein Verpressen von Randbereichen eines eingelegten erwärmten Kunststoffschlauchs hergestellt werden, wobei das Blasform-Werkzeug an den Außenrändern Schieber (4, 5) aufweist, die durch ein nach Innenfahren die Randbereiche zu Dichtlippen (6, 7) verpressen.

2. Flaches Teil mit einer an seinem äußeren Rand versehenen Abdichtung, insbesondere ein Deckel oder eine innere Trennwand, insbesondere für einen Müllbehälter oder einen Lagerkasten, mit jeweils zwei an den Seitenrändern (10) des Teils vorstehenden Dichtlippen (6, 7), die zwischen sich eine sich öffnende Rinne (11) bilden.

3. Werkzeug zum Herstellen eines mit einer Abdichtung an seinem äußeren Rand versehenen flachen Teils (1) im Hohlkörperblasformverfahren, mit einer zwei schließbare Formhälften (2, 3) enthaltenden Form zur Aufnahme und Verarbeitung eines erwärmten, insbesondere vorgeblasenen Kunststoffschlauches, wobei seitlich an der Form Schieber (4, 5) angeordnet sind, die zu den Stirnseiten (10) der Formhälften bewegbar sind und im Zusammenwirken mit diesen die durch das Schließen der Formhälften erzeugten vorstehenden Randleisten des Kunststoffmaterials zu jeweils zwei an den Seitenrändern des flachen Teils vorstehenden Dichtlippen (6, 7) verpressen.

4. Werkzeug nach Anspruch 3, **dadurch gekennzeichnet,** daß für jeden Seitenrand (Stirnseite) (10), an dem Dichtlippen (6, 7) angeordnet werden sollen, mindestens ein Schieber (4, 5) vorgesehen ist.

5. Werkzeug nach einem der vorherigen Ansprüche, **dadurch gekennzeichnet,** daß die Dichtlippen (6, 7) außerhalb des äußersten Dichtlippenrandes eine Wandstärke von 0,3 bis 0,7, insbesondere von 0,5 mm haben.

## Claims

1. A process for the production of a flat member, more particularly a lid or an inside partition provided with a seal at its outer edge, more particularly for a refuse container or a storage box, wherein two sealing lips (6, 7) projecting at the marginal edges of the member (1) produced by hollow body blowing moulds are produced by the pressing of marginal zones of an inserted heating plastics tube, the blowing mould tool having at the outer edges pushers (4, 5) which by moving inwards press the marginal zones into sealing lips (6, 7).

2. A flat member having a seal provided at its outer edge, more particularly a lid or an inside partition, more particularly for a refuse container or a storage box, having two sealing lips (6, 7) which project at each of the marginal edges (10) of the member and form an opening channel (11) between themselves.

3. A tool for the production by the hollow member blowing mould process of a flat member (1) provided with a seal at its outer edge, having a mould, containing two closeable mould halves (2, 3), for the reception and processing of a heated, more particularly preblown plastics tube, wherein disposed laterally on the mould are pushers (4, 5) which can be moved towards the end faces (10) of the mould halves and co-operate therewith to press each of the projecting marginal strips of the plastics material produced by the closure of the mould halves into two sealing lips (6, 7) projecting at the marginal edges of the flat member.

4. A tool according to claim 3, characterised in that at least one pusher (4, 5) is provided for each marginal edge (end face) (10) at which sealing lips (6, 7) are to be disposed.

5. A tool according to one of the preceding claims characterised in that outside the outermost sealing lip edge the sealing lips (6, 7) have a wall thickness of 0.3 to 0.7, more particularly 0.5 mm.

## Revendications

1. Procédé de fabrication d'une pièce plate munie d'une étanchéité sur son bord extérieur, en particulier un couvercle ou une paroi séparatrice intérieure, en particulier pour une poubelle ou un bac de stockage, dans lequel deux lèvres d'étanchéité (6,7), en saillie respectivement sur les bords latéraux de la pièce (1) fabriquée par extrusion-soufflage, sont fabriquées par compression de zones de bord d'un tuyau en matière synthétique chauffé inséré, l'outil de soufflage présentant sur les bords extérieurs des coulisses (4, 5) qui compriment les zones de bord en lèvres d'étanchéité (6, 7) par un déplacement vers l'intérieur.

2. Pièce plate avec une étanchéité disposée à son bord extérieur, en particulier un couvercle ou une paroi séparatrice intérieure, en particulier pour une poubelle ou un bac de stockage, avec deux lèvres d'étanchéité (6, 7) respectivement en saillie sur les bords latéraux (10) de la pièce, qui forment entre elles un conduit (11) ouvert.

3. Outil de fabrication d'un pièce plate (1) munie d'une étanchéité sur son bord extérieur, par un procédé d'extrusion-soufflage, avec un moule contenant deux demi-moules (2, 3) assemblables pour recevoir et traiter un tuyau en matière synthétique, chauffé, en particulier présoufflé, des coulisses (4, 5) étant disposées latéralement sur le moule, qui sont mobiles vers les faces frontales (10) des demi-moules et, en coopération avec ceux-ci, compriment les rebords saillants du matériau synthétique produits par l'assemblage des demi-moules en deux lèvres d'étanchéité (6, 7) en saillie respectivement sur les bords latéraux de la pièce plate.

4. Outil selon la revendication 3,
caractérisé en ce que, pour chaque bord latéral (face frontale) (10) sur lequel doivent être disposées des lèvres d'étanchéité (6, 7), est disposé au moins une coulisse (4, 5).

5. Outil selon l'une des revendications précédentes,
caractérisé en ce que les lèvres d'étanchéité (6, 7) ont, en dehors du bord de lèvre d'étanchéité le plus extérieur, une épaisseur de paroi de 0,3 à 0,7, en particulier de 0,5 mm.
